# EUROPEAN PATENT APPLICATION

(11) **EP 3 364 021 A1**
(43) Date of publication of application: **22.08.2018**
(21) Application number: 18157140.7
(22) Date of filing: 16.02.2018
(51) Int. Cl.: F03D 7/02, F03D 17/00

(54) **SYSTEM AND METHOD FOR CONTROLLING YAW OF A WIND TURBINE**

(30) Priority: 21.02.2017 DK 201700120
(71) Applicant: Scada International ApS, 7490 Aulum (DK)
(72) Inventor: HØRLYCK, Peter Frost, 8740 Brædstrup (DK)
(74) Representative: Rasmussen, Martin Hoffgaard

(57) **Abstract**

The invention relates to a control system for controlling yaw of a wind turbine having a vertically oriented tower; a nacelle pivotally connected to a top end of said tower; a rotor comprising two or more blade and being mechanically connected to an electric generator arranged in said nacelle; and a yaw mechanism for altering the yaw angle of the nacelle; wherein
said system comprises:
azimuth identification means for identification the azimuth angle of one of said rotor blades as a function of time;
measuring means for measuring one or more performance yield parameters of said wind turbine as a function of time;
calculation means for assigning a power uptake equivalent from said one or more performance yield parameters, in a case where said one or more performance yield parameters themselves do not represent a power uptake equivalent;
correlation means for correlating i) the azimuth angle of one of the rotor blades, as identified by said azimuth identification means; with ii) the power uptake equivalent, as measured by said measuring means; or as assigned by said calculation means; and
detection means for detecting a discrepancy between a situation in which one of the rotor blades is having an azimuth angle of 180° and a minimum power uptake equivalent;
**characterized in** that said measuring means is/are configured for measuring one or more parameters which solely or in combination are directly correlatable with a power uptake by said rotor.

The inventive control system allows for minimizing a yaw error, relative to the direction of the wind, of the rotor of a wind turbine.

## Description

### Field of the invention

The present invention relates generally to the field of controlling wind turbines. More specifically, in a first aspect the present invention relates to a control system for controlling yaw of a wind turbine. In a second aspect the present invention relates to the use of a control system according to the first aspect for controlling yaw of a wind turbine. In a third aspect the present invention relates to using a correlation between an azimuth angle of a wind turbine blade and a power uptake equivalent for controlling a wind turbine. In a fourth aspect the present invention relates to a method for controlling a wind turbine. In a fifth aspect the present invention relates to a wind turbine comprising the control system according to the first aspect of the present invention. In a sixth aspect the present invention relates to a computer program product, when running on a computer, being adapted to perform the method according to the fourth aspect. Finally, the seventh aspect the present invention relates to a data storage comprising a computer program product according to the sixth aspect.

### Background of the invention

In the last decades a tremendous number of wind turbines has been built and set up in many countries.

Wind turbines provide for an environmentally friendly source of energy relying on moving air masses which in turn originates from meteorological phenomena, such as meteorological low pressure and high pressure regions, causing wind to blow across the surface of the ground or of the surface of the sea.

When wind is blowing across an area comprising a wind turbine the wind will exert a force on each of the wing shaped turbine blades of the wind turbine which will result in a rotational movement of the rotor of the wind turbine. The rotor is coupled to a generator for transforming a rotational movement of the rotor into to an induced electric power which will be distributed to a power grid.

The wind turbine blades will take up kinetic energy from the wind according to various physical factors and convert this kinetic energy into torque in the wind turbine rotor. According to fluid dynamics a wind blowing over ground or over sea water will have a wind speed of zero (0) at the ground or at the sea level. Above ground or sea level, the wind gradient becomes increasingly more profound with increased wind speeds at increased heights. Hence, the blowing wind contributes to kinetic energy to an area of a wind turbine blade depending on the height of that blade.

Another factor influencing the take-up of kinetic energy from the wind by the wind turbine blade is the so-called shadowing effect of the tower. As the rotor carrying the nacelle comprising the wind turbine blade is mounted on the top of a wind turbine tower and as the wind turbine tower has a not insignificant lateral extension the tower will exert a shadowing effect on the strength of the wind meaning that the take-up of kinetic energy from the wind by a wind turbine blade passing its lowest position is reduced in the area in front of the wind turbine tower due to lower wind speed at this position.

For economic reasons it is paramount to the feasibility of a wind turbine or of a whole wind turbine park that the power yield of each wind turbine to the extent possible continuously is optimum.

In order to optimize the power uptake in a modern wind turbine, a control mechanism constantly attempts to align the rotor plane of the rotor blades in a direction perpendicular to the wind direction.

Accordingly, in modern wind turbines the wind direction is constantly monitored and continuously the rotor plane is constantly aligned in relation to this wind direction. The wind direction is usually monitored by one or more wind vanes arranged at the top of the nacelle of the wind turbine.

Using wind vanes for determination of the wind direction with the view to adjust the yaw of the nacelle so as to align the rotor blade perpendicular to the wind direction poses a number of problems.

First, locating wind vanes on top of the nacelle results in inaccurate determination of the wind direction due to turbulence at that location caused by the rotating wind turbine blades passing in front of the vanes.

Secondly, the optimum wind direction which will be used as the basis for optimum yaw alignment may not be a detectable by a wind vane. Rather, the optimum wind direction for use for control of the yaw in fact is determined by the rotor itself, viz. that direction which provides for an optimum power uptake by the wind turbine blades. This wind direction may represent an "average wind direction" which may be seen as an average of wind directions, averaged over the whole area being swept by the rotor plane.

Accordingly, the prior art control systems of the wind vane type for monitoring the wind direction of a wind turbine blade assembly does not provide for optimum yaw control.

It is an objective of the present invention to alleviate, or even eliminate the above described disadvantages of the prior art and to provide systems, methods and uses which provides for improved yaw control with the view to optimize power uptake by a wind turbine.

### Brief description of the invention

This object is fulfilled with the present invention in its various aspects.

Accordingly, the present invention in its first aspect relates to a control system for controlling yaw of a wind turbine having a vertically oriented tower; a nacelle pivotally connected to a top end of said tower; a rotor comprising two or more rotor blades and being mechanically connected to an electric generator arranged in said nacelle; and a yaw mechanism for altering the yaw angle of the nacelle; wherein
said system comprises:
azimuth identification means for identification the azimuth angle of one of said rotor blades as a function of time;
measuring means for measuring one or more performance yield parameters of said wind turbine as a function of time;
calculation means for assigning a power uptake equivalent from said one or more performance yield parameters, in a case where said one or more performance yield parameters themselves does/do not represent a power uptake equivalent;
correlation means for correlating i) the azimuth angle of one of the rotor blades, as identified by said azimuth identification means; with ii) the power uptake equivalent, as measured by said measuring means; or as assigned by said calculation means; and
detection means for detecting a discrepancy between a situation in which one of the rotor blades is having an azimuth angle of 180° and a minimum power uptake equivalent.

The control system of the first aspect is characterized in that said measuring means is/are configured for measuring one or more parameters which solely or in combination are directly correlatable with a power uptake by said rotor.

In a second aspect the present invention relates to the use of a control system according to the first aspect for controlling the yaw of a wind turbine.

In a third aspect the present invention relates to the use of a correlation between the azimuth angle of one or more of the rotor blades of a wind turbine as a function of time, on the one hand; and a power uptake equivalent of said wind turbine as a function of time, on the other hand; for controlling the yaw of said wind turbine.

In a fourth aspect the present invention relates to a method for controlling a wind turbine, comprising the steps:
a) monitoring the azimuth angle of one or more of the turbine blades of a rotor of said wind turbine as a function of time;
b) at the same time as performing step a), measuring one or more performance yield parameters of said wind turbine as a function of time;
c) assigning a power uptake equivalent from said one or more performance yield parameters as a function of time;
d) correlating the azimuth angle of one or more of the rotor blades of the wind turbine, as determined in step a) with the power uptake equivalent, as determined in step c);
e) detection of a yaw misalignment in case there exist a discrepancy between a situation in which one of the rotor blades are having an azimuth angle of 180° and a minimum of power uptake equivalent.

The method of the fourth aspect is characterized in that said performance yield parameters solely or in combination are directly correlatable with a power uptake by said rotor.

In a fifth aspect the present invention relates to a wind turbine comprising a control system according to the first aspect of the present invention.

In a sixth aspect the present invention relates to a computer program product, when running on a computing device, being adapted to perform the method according to the fourth aspect of the present invention.

In a seventh aspect the present invention relates to a data storage comprising a computer program product according to the sixth aspect of the present invention.

The present invention in its various aspects provides for improved control of a wind turbine, especially in terms of optimizing the yaw angle so as to minimize or even eliminate any yaw error or misalignment of the rotor plane relative to the wind direction. This may be performed by constantly and/or continuously correcting the actual yaw angle.

The present invention in its various aspects thus ensures optimized power uptake by the wind turbine which ultimate results in improved operational economy of said wind turbine.

### Brief description of the figures

Fig. 1 schematically illustrates a wind turbine with its various components for use with the present invention.
Fig. 2 is a 3D diagram illustrating the concept of wind gradient or wind shear as a function of height and of the shadowing effect of a wind turbine tower.
Fig. 3a illustrates a wind turbine rotor configuration in a situation in which no yaw error is present.
Fig. 3b illustrates a wind turbine rotor configuration in a situation in which a yaw error is present.
Fig. 3c illustrates another wind turbine rotor configuration in a situation in which a yaw error is present.
Fig. 4a is a graph illustrating an idealized situation of having measuring a power uptake equivalent as a function of azimuth angle of a wind turbine rotor in a situation in which no yaw error is present as illustrated in fig. 3a.
Fig. 4b is a graph illustrating an idealized situation of having measuring a power uptake equivalent as a function of azimuth angle of a wind turbine rotor in a situation in which a yaw error is present as illustrated in fig. 3b.
Fig. 4c is a graph illustrating an idealized situation of having measuring a power uptake equivalent as a function of azimuth angle of a wind turbine rotor in another situation in which a yaw error is present as illustrated in fig. 3c.
Fig. 5 schematically illustrates one working mode of the system according to the present invention.
Fig. 6a is a graphical representation of power uptake equivalent obtained from measurements as a function of segments of azimuth angles at a yaw misalignment of zero (0) degree.
Fig. 6b is a graphical representation of power uptake equivalent obtained from measurements as a function of segments of azimuth angles at a yaw misalignment of 40 degrees.

### Detailed description of the invention

### The first aspect of the present invention

The present invention relates in a first aspect to a control system for controlling yaw of a wind turbine having a vertically oriented tower; a nacelle pivotally connected to a top end of said tower; a rotor comprising two or more rotor blades and being mechanically connected to an electric generator arranged in said nacelle; and a yaw mechanism for altering the yaw angle of the nacelle; wherein
said system comprises:
azimuth identification means for identification the azimuth angle of one of said rotor blades as a function of time;
measuring means for measuring one or more performance yield parameters of said wind turbine as a function of time;
calculation means for assigning a power uptake equivalent from said one or more performance yield parameters, in a case where said one or more performance yield parameters themselves does/do not represent a power uptake equivalent;
correlation means for correlating i) the azimuth angle of one of the rotor blades, as identified by said azimuth identification means; with ii) the power uptake equivalent, as measured by said measuring means; or as assigned by said calculation means; and
detection means for detecting a discrepancy between a situation in which one of the rotor blades is having an azimuth angle of 180° and a minimum power uptake equivalent.

The control system of the first aspect is characterized in that said measuring means is/are configured for measuring one or more parameters which solely or in combination are directly correlatable with a power uptake by said rotor.

Accordingly, the system of the first aspect of the present invention is configured to detect a misalignment of the rotor plane of a wind turbine, relative to the wind direction, and based on the presence and detection of such misalignment the yaw angle of the nacelle and/or the rotor axis may be adjusted so as to eliminate that misalignment or yaw error.

In the present description and in the appended claims the term "azimuth angle of a rotor blade" and the term "azimuth angle of a wind turbine blade" shall be construed to mean the angle between a top position of that specific rotor blade or wind turbine blade and the actual position of that specific rotor/turbine blade, as measured in the direction om rotation of the rotor of said wind turbine.

In the present description and in the appended claims the term "performance yield parameter" shall be construed to mean a measured parameter, which solely or in combination with other measured parameters can be correlated so as to represent a power uptake of the wind turbine on which the measurements are being performed.

In the present description and in the appended claims the term "power uptake equivalent" shall be construed to mean a physical expression that originates by correlation of one or more measured performance yield parameters as measured on a wind turbine, and which is representative of the power uptake of that wind turbine.

Accordingly, in some instances, a single performance yield parameter may solely and in itself be correlated to a power uptake equivalent, or may even be equal to a power uptake equivalent.

In other instances, two or more different performance yield parameters may in combination be correlated to a power uptake equivalent

The power uptake equivalent may not necessarily be expressed in watts. For example the power uptake equivalent may be expressed as a torque of the rotor shaft of the wind turbine.

Also, the power uptake equivalent may not necessarily represent a numerically correct or representation of the actual power being taken up by the rotor of the wind turbine.

On the contrary, what is important here is that the power uptake equivalent represents a reliable representation of the power actually being taken up by the rotor blades of the wind turbine on which the measurements are being performed.

For example, the angular velocity of the rotor does not in itself and solely qualify as being a power uptake equivalent. This is because there exist situations in which the rotor has gained momentum so as to be able to rotate by itself for seconds or even minutes and in which situation the blades have been pitched so as to be configured in a neutral configuration where the blades do not take up any power from the wind. In this situation the rotor rotates by a certain angular velocity, but there will be no power uptake by the turbine blades. Accordingly, angular velocity of the rotor cannot in itself and solely qualify as being a power uptake equivalent.

Another example is measuring on the generator only an induced voltage or an induced current. As phase shift between an induced current and an induced voltage exists in electric AC generators, a measured voltage induced on the generator may not reliable represent a power uptake by the rotor of a wind turbine. The same applies in relation to solely measuring an electric current induced by the generator. Accordingly, a measured induced voltage or a measured induced current do not in themselves represent a reliable representation of a power uptake by a rotor of a wind turbine. On the contrary, a measured voltage and a measured current and a measured phase shift between induced current and voltage may qualify as performance yield parameters which collectively may be correlated to a reliable power uptake equivalent, as power can be calculated from these three measured parameters. In such an instance the power uptake can be calculated from the sum of the of the power of the phases of the generator, where the power of each phase is calculated as the product of current and voltage induced and cosine to the phase shift between induced voltage and current.

In the present description and in the appended claims the term "control" shall be construed to mean either detection of a misalignment of a rotor relative to the wind direction, or alternatively, the term may also mean detection of a misalignment of a rotor relative to the wind direction and subsequently providing feedback so as to minimize or even eliminate such misalignment.

It should be noted that when correlating an azimuth angle of a wind turbine blade with a power uptake of the wind turbine according to the various aspects of the present invention, interest may be focused on that wind turbine blade of the rotor having an azimuth angle coming closest to 180° because this specific wind turbine blade is the one encountering a shadowing effect from the tower.

In one embodiment of the control system of the first aspect of the present invention the detection means are configured to detect said discrepancy based on the azimuth angle of one of the wind turbine blades in a situation at which the power uptake by said rotor is at a minimum.

In this embodiment the determination of a discrepancy is being found by first finding a power uptake minimum and then determining the azimuth angle of one of the wind turbine blades and subsequently determining whether a discrepancy exists, i.e. whether the wind turbine blade being closest to having an azimuth angle of 180° deviates form an azimuth angle of 180°.

In one embodiment of the control system of the first aspect of the present invention the detection means are configured to detect said discrepancy based on the power uptake by said rotor in a situation at which one of the wind turbine blades exhibits an azimuth angle of 180°.

In this embodiment the determination of a discrepancy is being found by first determining a point in time where one of the wind turbine blades exhibits an azimuth angle of 180°, and then determining the power uptake in this situation, and subsequently determining whether a discrepancy exists, i.e. whether the wind turbine provides a power minimum in the situation where that blade is having an azimuth angle of 180°.

In one embodiment of the control system of the first aspect of the present invention the detection means are configured to detect said discrepancy based on a time difference between the moment in time at which one of the wind turbine blades is exhibiting an azimuth angle of 180° and the moment in time at which the power uptake by said rotor is at a minimum.

In this embodiment the point in time where one of the wind turbine blades is exhibiting an azimuth angle of 180° is determined. Also, the point in time the power uptake by said rotor is at a minimum is determined. Subsequently it is determined whether a discrepancy exists, i.e. whether these two moments in time coincide or not.

In one embodiment of the control system of the first aspect of the present invention the detection means is being configured to be able to provide control signal indicative of a yaw misalignment in case said detection means is detecting a discrepancy.

A control signal aids in informing the operator that the wind turbine is not operating with a maximum power yield.

In one embodiment of the control system of the first aspect of the present invention the control system further comprising a control unit; said control unit being configured to be able provide an instruction to said yaw mechanism of said wind turbine in order to adjust the yaw angle of said wind turbine so as to reduce yaw misalignment.

This embodiment accordingly allows providing a feedback to the yaw mechanism so as to reduce or even eliminate the misalignment of the yaw angle, relative to the wind.

In one embodiment of the control system of the first aspect of the present invention the measuring means is/are configured for measuring one or more of the following performance yield parameters: power provided by said generator; electric voltage and current and phase shift provided by said generator; torque of the rotor axle of said wind turbine; axial torsion of the rotor axle, power uptake as measured on the gearbox of the wind turbine; degree of axial stretch between a particular wind turbine blade and the position of mounting thereof on the hub or rotor axle; or a combination of angular velocity of the rotor and degree of axial stretch between a particular wind turbine blade and the position of mounting thereof on the hub or rotor axle.

These types of performance yield parameters are parameters which will allow correlation to a power uptake equivalent which in a reliable way will represent an actual power uptake of the rotor of the wind turbine.

In one embodiment of the control system of the first aspect of the present invention the azimuth identification means is configured for identification said azimuth angle continuously or by sampling.

In one embodiment of the control system of the first aspect of the present invention the measuring means is configured for measuring said one or more performance yield parameters continuously or by sampling.

In one embodiment of these embodiments of the present invention said azimuth identification means and/or said measuring means is/are configured for independently measuring said azimuth angle or performance yield parameters, respectively, by sampling at a sampling rate of 10 Hz or more, such as 50 Hz or more, for example 100 Hz or more, such as 500 Hz or more, e.g. 1000 Hz or more, such as 5000 Hz or more, or 10.000 Hz or more.

In some instances it will be difficult or even impossible to continuously measure the azimuth angle and/or the performance yield parameters. In such situations, performing measurements by sampling is beneficial.

In one embodiment of these embodiments of the present invention the control system furthermore comprises computation means for interpolation of the azimuth angle; and/or of the one or more performance yield parameters or the power uptake equivalent, between samples of measurements.

In one embodiment of these embodiments of the present invention the computation means is being configured to perform said interpolation by mathematical techniques, such as Lagrange techniques or Savitzky-Golay techniques.

A person skilled in the art of analytical mathematics will know of such methods.

By making interpolation, the magnitude of the actual performance yield parameters, power uptake equivalent and/or azimuth angle can be determined with greater precision.

In one embodiment of the control system of the first aspect of the present invention the computation means is being configured to identify a minimum of power uptake from said measuring means and being configured to identify an azimuth angle in respect of one of the turbine blades corresponding to this minimum; or wherein said computation means is being configured to identify an azimuth angle of 180° in respect of one of the turbine blades, and being configured to identify the power uptake equivalent at this configuration of the rotor.

Accordingly, in this embodiment the determination of a discrepancy is being found by first finding a power uptake minimum and then determining the azimuth angle of one of the wind turbine blades and subsequently determining whether a discrepancy exists, i.e. whether the wind turbine blade being closest to having an azimuth angle of 180° deviates form an azimuth angle of 180°; or alternatively in this embodiment the determination of a discrepancy is being found by first determining a point in time where one of the wind turbine blades exhibits an azimuth angle of 180°, and then determining the power uptake in this situation, and subsequently determining whether a discrepancy exists, i.e. whether the wind turbine provides a power minimum in the situation where that blade is having an azimuth angle of 180°.

In one embodiment of the control system of the first aspect of the present invention the control system is being configured for use with a wind turbine having an essentially horizontally oriented rotor axle.

Such type of wind turbine, as opposed to wind turbines having an essential vertical rotor axle, is by far the most widespread.

In one embodiment of the control system of the first aspect of the present invention the control system is being configured for use with a wind turbine comprising 2, 3, 4, 5 or 6 wind turbine blades.

Such type of wind turbine is by far the most widespread.

In one embodiment of the control system of the first aspect of the present invention the control system is being configured for use with a wind turbine comprising an electric generator, generating electric AC power. Preferably the generator is being for being connected to the grid.

AC current generators are widespread in wind turbines.

In one embodiment of the control system of the first aspect of the present invention the control system further comprises:
means which are configured to, in at least in an abstract way, constructing a curve representing the power uptake equivalent as a function of azimuth angles; and
wherein said means are configured to identify "shoulder(s)" on said curve;
wherein said system is configured to identify a minimum of power uptake equivalence on said curve in the vicinity of one or more of such shoulders;
wherein said system is configured to only consider those minimum of power uptake equivalences which are present in the vicinity of a "shoulder" as minima of power uptake equivalences which are truly caused by the shadowing effect of the tower of said wind turbine in the detection of a discrepancy between a situation in which one of the rotor blades is having an azimuth angle of 180° and a minimum power uptake equivalent.

Experiments have shown that a graphic curve representing the power uptake equivalent as a function of azimuth angles will show one or two "shoulders" in the vicinity of those minima of power uptake equivalences which are representing minimum of power uptake equivalence which is truly caused by the shadowing effect of the tower of the wind turbine.

This is in contrast to other situations where a minimum of power uptake equivalence is detected, but caused by other phenomena, such as by wind shear or by variations in the wind speed at the area of the wind turbine. In such latter situations the graphic curve representing the power uptake equivalent as a function of azimuth angles will not show such "shoulders".

Accordingly, the detection of shoulders on a graphic curve representing the power uptake equivalent as a function of azimuth angles will enable an operator to identify those minima of power uptake equivalences which are representing a minimum of power uptake equivalence which is truly caused by the shadowing effect of the tower of the wind turbine.

In one embodiment of this embodiment the system is configured to discard those minima of power uptake equivalences, which are not present in the vicinity of a "shoulder", as minima of power uptake equivalences to be used in the detection of a discrepancy between a situation in which one of the rotor blades is having an azimuth angle of 180° and a minimum power uptake equivalent.

Hereby, false positive indications may be eliminated.

In one embodiment of this embodiment, the system is configured for detection of minima of a power uptake equivalence on said curve within the vicinity of such shoulder(s) corresponding to an azimuth distance from one or more of such shoulders of ± 20° from said shoulder(s), such as within an azimuth distance of ± 10°, for example within an azimuth distance of ± 9°, for example within an azimuth distance of ± 8°, e.g. within an azimuth distance of ± 7°, such as within an azimuth distance of ± 6°, such as within an azimuth distance of ± 5°, for example within an azimuth distance of ± 4°, e.g. within an azimuth distance of ± 3°, such as within an azimuth distance of ± 2° or within an azimuth distance of ± 1° from said shoulder on said curve.

Limiting the azimuth angles within such azimuth distances have proven beneficial in the detection of minima of power uptake equivalences which are truly caused by the shadowing effect of the tower of the wind turbine.

In such embodiments, "shoulder" shall be defined as a relatively rapid increase or decrease in inclination of the tangent of said curve in the vicinity of a minimum of a power uptake equivalence of said curve.

Here, the term "relatively rapid increase or decrease" shall be construed to mean an increase or decrease in inclination of the tangent of the curve which in distinctly different from the inclination of the tangent of the curve at other azimuth positions corresponding to azimuth distances in the vicinity thereof. Such a distinctly different inclination of the tangent at a shoulder may accordingly represent a sharper bend on that curve.

In one embodiment of this embodiment the term "in the vicinity of a minimum of a power uptake equivalence of said curve" shall mean within an azimuth distance corresponding to an azimuth angle of ± 20° of said minimum of power uptake equivalence on said curve, such as within an azimuth distance of ± 10°, for example' within an azimuth distance of ± 9°, for example within an azimuth distance of ± 8°, e.g. within an azimuth distance of ± 7°, such as within an azimuth distance of ± 6°, such as within an azimuth distance of ± 5°, for example within an azimuth distance of ± 4°, e.g. within an azimuth distance of ± 3°, such as within an azimuth distance of ± 2° or within an azimuth distance of ± 1° of said minimum of power uptake equivalence on said curve.

In one embodiment of these embodiments the means for constructing a curve representing the power uptake equivalent as a function of azimuth angles is being computer means and/or wherein said means for identifying "shoulder(s)" on said curve is being computer means.

Such computer means allow for making real-time or near real-time calculation and identification of minima of power uptake equivalence which is truly caused by the shadowing effect of the tower of the wind turbine.

In one embodiment of these embodiments the means for constructing a curve representing the power uptake equivalent as a function of azimuth angles is being said correlation means and/or wherein said means for identifying "shoulder(s)" on said curve is being said correlation means of said control system.

In one embodiment of the control system of the first aspect of the present invention the control system is configured for automatic operation.

### The second aspect of the present invention

The present invention relates in a second aspect to a use of a control system according to the first aspect of the present invention for controlling the yaw of a wind turbine.

In one embodiment of the use of the second aspect of the present invention the use is for minimizing yaw misalignment of a rotor of a wind turbine.

### The third aspect of the present invention

The present invention relates in a third aspect to a use of a correlation between the azimuth angle of one or more of the rotor blades of a wind turbine as a function of time, on the one hand; and a power uptake equivalent of said wind turbine as a function of time, on the other hand; for controlling the yaw of said wind turbine.

In one embodiment of the use of the third aspect of the present invention the use is for minimizing yaw misalignment of a rotor of a wind turbine.

### The fourth aspect of the present invention

The present invention relates in a fourth aspect to a method for controlling a wind turbine. This method comprises the steps:
a) monitoring the azimuth angle of one or more of the turbine blades of a rotor of said wind turbine as a function of time;
b) at the same time as performing step a), measuring one or more performance yield parameters of said wind turbine as a function of time;
c) assigning a power uptake equivalent from said one or more performance yield parameters as a function of time;
d) correlating the azimuth angle of one or more of the rotor blades of the wind turbine, as determined in step a) with the power uptake equivalent, as determined in step c);
e) detection of a yaw misalignment in case there exist a discrepancy between a situation in which one of the rotor blades are having an azimuth angle of 180° and a minimum of power uptake equivalent.

The method of the fourth aspect is characterized in that said performance yield parameters solely or in combination are directly correlatable with a power uptake by said rotor.

In one embodiment of the method of the fourth aspect of the present invention the method further comprising the step of adjusting the yaw angle of the rotor on the basis of detection of a yaw misalignment as determined in step e) so as to reduce or eliminate said yaw misalignment.

This embodiment accordingly allows providing a feedback to the yaw mechanism so as to reduce or even eliminate the misalignment of the yaw angle, relative to the wind.

In one embodiment of the method of the fourth aspect of the present invention the one or more performance yield parameters being selected from the group comprising: power provided by a generator of said wind turbine; electric voltage and current and phase shift provided by a generator of said wind turbine; or torque of a rotor axle of said wind turbine ; axial torsion of the rotor axle, power uptake as measured on the gearbox of the wind turbine; degree of axial stretch between a particular wind turbine blade and the position of mounting thereof on the hub or rotor axle; or a combination of angular velocity of the rotor and degree of axial stretch between a particular wind turbine blade and the position of mounting thereof on the hub or rotor axle.

These types of performance yield parameters are parameters which will allow correlation to a power uptake equivalent which in a reliable way will represent an actual power uptake of the rotor of the wind turbine.

In one embodiment of the method of the fourth aspect of the present invention the azimuth angle determination performed in step a) are performed continuously or by sampling.

In one embodiment of the method of the fourth aspect of the present invention the measurements of one or more performance yield parameters performed in step b) are performed continuously or by sampling.

In one embodiment of these two embodiments the measurements performed in step a) or in step b) independently are being performed by sampling at a sampling rate of 10 Hz or more, such as 50 Hz or more, for example 100 Hz or more, such as 500 Hz or more, e.g. 1000 Hz or more, such as 5000 Hz or more, or 10.000 Hz or more.

In some instances it will be difficult or even impossible to continuously measure the azimuth angle and/or the performance yield parameters. In such situations, performing measurements by sampling is beneficial.

In one embodiment of the method of the fourth aspect of the present invention the method furthermore comprising interpolation of the azimuth angle; and/or of the one or more performance yield parameters or of the power uptake equivalent, between samples of measurements.

In one embodiment of the method of the fourth aspect of the present invention said interpolation is being performed by mathematical techniques, such as Lagrange techniques or Savitzky-Golay techniques.

A person skilled in the art of analytical mathematics will know of such methods.

By making interpolation, the magnitude of the actual performance yield parameters, power uptake equivalent and/or azimuth angle can be determined with greater precision.

In one embodiment of the method of the fourth aspect of the present invention the detection of a yaw misalignment performed in step e) is being performed by identifying a minimum of power uptake as determined in step c) and identifying an azimuth angle corresponding to this minimum; or alternatively wherein said detection of a yaw misalignment performed in step e) is being performed by identifying an azimuth angle of 180° in respect of one of the turbine blades and identifying the power uptake equivalent corresponding to this configuration of the rotor.

Accordingly, in this embodiment the determination of a discrepancy is being found by first finding a power uptake minimum and then determining the azimuth angle of one of the wind turbine blades and subsequently determining whether a discrepancy exists, i.e. whether the wind turbine blade being closest to having an azimuth angle of 180° deviates form an azimuth angle of 180°; or alternatively in this embodiment the determination of a discrepancy is being found by first determining a point in time where one of the wind turbine blades exhibits an azimuth angle of 180°, and then determining the power uptake in this situation, and subsequently determining whether a discrepancy exists, i.e. whether the wind turbine provides a power minimum in the situation where that blade is having an azimuth angle of 180°.

In one embodiment of the method of the fourth aspect of the present invention the method is being performed during operation of a wind turbine having an essentially horizontally oriented rotor axle.

Such type of wind turbine, as opposed to wind turbines having an essential vertical rotor axle, is by far the most widespread.

In one embodiment of the method of the fourth aspect of the present invention the method is being performed during operation of a wind turbine comprising 2, 3, 4, 5 or 6 wind turbine blades.

Such type of wind turbine is by far the most widespread.

In one embodiment of the method of the fourth aspect of the present invention the wind turbine is comprising an electric generator, generating electric AC power, preferably for being connected to the grid.

AC current generators are widespread in wind turbines.

In one embodiment of the method of the fourth aspect of the present invention the method further comprising:
constructing a curve representing the power uptake equivalent as a function of azimuth angles; and
identifying "shoulder(s)" on said curve; and identify a minimum of power uptake equivalence on said curve in the vicinity of one or more of such shoulders;
wherein in step e) only those minima of power uptake equivalences which are present in the vicinity of a "shoulder", are considered as minima of power uptake equivalences which are truly caused by the shadowing effect of the tower of said wind turbine in the detection of a yaw misalignment when a discrepancy exists between a situation in which one of the rotor blades is having an azimuth angle of 180° and a minimum power uptake equivalent.

Experiments have shown that a graphic curve representing the power uptake equivalent as a function of azimuth angles will show one or two "shoulders" in the vicinity of those minima of power uptake equivalences which are representing minimum of power uptake equivalence which is truly caused by the shadowing effect of the tower of the wind turbine.

This is in contrast to other situations where a minimum of power uptake equivalence is detected, but caused by other phenomena, such as by wind shear or by variations in the wind speed at the area of the wind turbine. In such latter situations the graphic curve representing the power uptake equivalent as a function of azimuth angles will not show such "shoulders".

Accordingly, the detection of shoulders on a graphic curve representing the power uptake equivalent as a function of azimuth angles will enable an operator to identify those minima of power uptake equivalences which are representing a minimum of power uptake equivalence which is truly caused by the shadowing effect of the tower of the wind turbine.

In one embodiment of this embodiment those minima of power uptake equivalences, which are not present in the vicinity of a "shoulder", are being discarded as minima of power uptake equivalences to be used in the detection of a yaw misalignment when a discrepancy exists between a situation in which one of the rotor blades is having an azimuth angle of 180° and a minimum power uptake equivalent.

Hereby, false positive indications may be eliminated.

In one embodiment of these embodiments said minima of a power uptake equivalence on said curve within the vicinity of such shoulder(s) is corresponding to an azimuth distance from one or more of such shoulders of ± 20° from said shoulder(s), such as within an azimuth distance of ± 10°, for example within an azimuth distance of ± 9°, for example within an azimuth distance of ± 8°, e.g. within an azimuth distance of ± 7°, such as within an azimuth distance of ± 6°, such as within an azimuth distance of ± 5°, for example within an azimuth distance of ± 4°, e.g. within an azimuth distance of ± 3°, such as within an azimuth distance of ± 2° or within an azimuth distance of ± 1° from said shoulder on said curve.

Limiting the azimuth angles within such azimuth distances have proven beneficial in the detection of minima of power uptake equivalences which are truly caused by the shadowing effect of the tower of the wind turbine.

In one embodiment of these embodiments a "shoulder" shall be defined as a relatively rapid increase or decrease in inclination of the tangent of said curve in the vicinity of a minimum of a power uptake equivalence of said curve.

Here, the term "relatively rapid increase or decrease" shall be construed to mean an increase or decrease in inclination of the tangent of the curve which in distinctly different from the inclination of the tangent of the curve at other azimuth positions corresponding to azimuth distances in the vicinity thereof. Such a distinctly different inclination of the tangent at a shoulder may accordingly represent a sharper bend on that curve.

In one embodiment of these embodiments the term "in the vicinity of a minimum of a power uptake equivalence of said curve" shall mean within an azimuth distance corresponding to an azimuth angle of ± 20° of said minimum of power uptake equivalence on said curve, such as within an azimuth distance of ± 10°, for example' within an azimuth distance of ± 9°, for example within an azimuth distance of ± 8°, e.g. within an azimuth distance of ± 7°, such as within an azimuth distance of ± 6°, such as within an azimuth distance of ± 5°, for example within an azimuth distance of ± 4°, e.g. within an azimuth distance of ± 3°, such as within an azimuth distance of ± 2° or within an azimuth distance of ± 1° of said minimum of power uptake equivalence on said curve.

In one embodiment of these embodiments said means for constructing a curve representing the power uptake equivalent as a function of azimuth angles is being computer means and/or wherein said means for identifying "shoulder(s)" on said curve is being computer means.

Such computer means allow for making real-time or near real-time calculation and identification of minima of power uptake equivalence which is truly caused by the shadowing effect of the tower of the wind turbine.

In one embodiment of the method of the fourth aspect of the present invention the method is being performed using a control system according to the first aspect of the present invention.

In one embodiment of the method of the fourth aspect of the present invention method is performed automatically.

### The fifth aspect of the present invention

The present invention relates in a fifth aspect to a wind turbine comprising a control system according to the first aspect of the present invention.

### The sixth aspect of the present invention

The present invention relates in a sixth aspect to a computer program product, when running on a computing device, being adapted to perform the method according to the fourth aspect of the present invention.

### The seventh aspect of the present invention

The present invention relates in a seventh aspect to a data storage comprising a computer program product according to the sixth aspect of the present invention.

The present invention in its various aspects is preferably being used in an automatic mode in which automation means provides for performing the necessary steps, such as the identification and measurements, the calculations and correlations and the detections. And optionally also the also by using automation means for automatically controlling of the yaw mechanism for adjustment of the yaw angle.

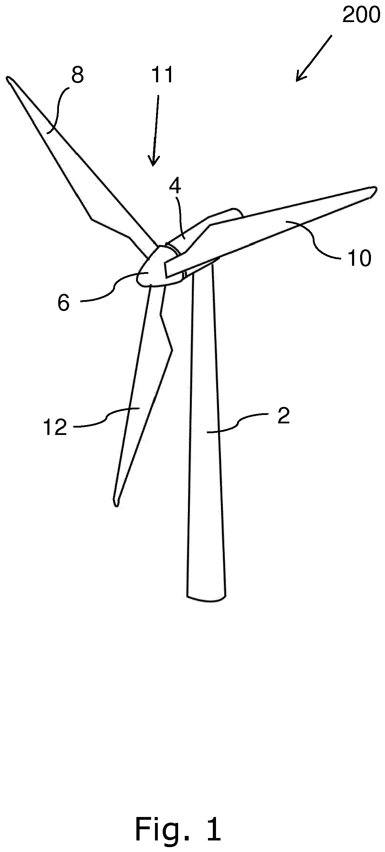

Referring now to the drawings for further illustration of the invention in its various aspects, fig. 1 schematically illustrates a wind turbine with its various components for use with the present invention. Fig. 1 shows a wind turbine 200 comprising a tower 2 having rotably mounted on top thereof a nacelle 4. In the nacelle is arranged a generator (not seen in fig. 1). The generator is mechanically coupled, optionally via a transmission gear, with a rotor axle. The rotor axle carries via the hub 6 a number of wind turbine blades 8, 10 and 12. In the case of fig. 1 the number of wind turbine blades is three.

The wind turbine comprises a yaw mechanism which is configured to control the yaw angle by rotating the nacelle around a vertical axis.

In the operation of a wind turbine it is preferred that the rotor plane of the wind turbine blades constantly is being aligned so that the horizontal direction of the rotor plane is being perpendicular to the horizontal component of the wind direction with the view to optimize power uptake from the wind.

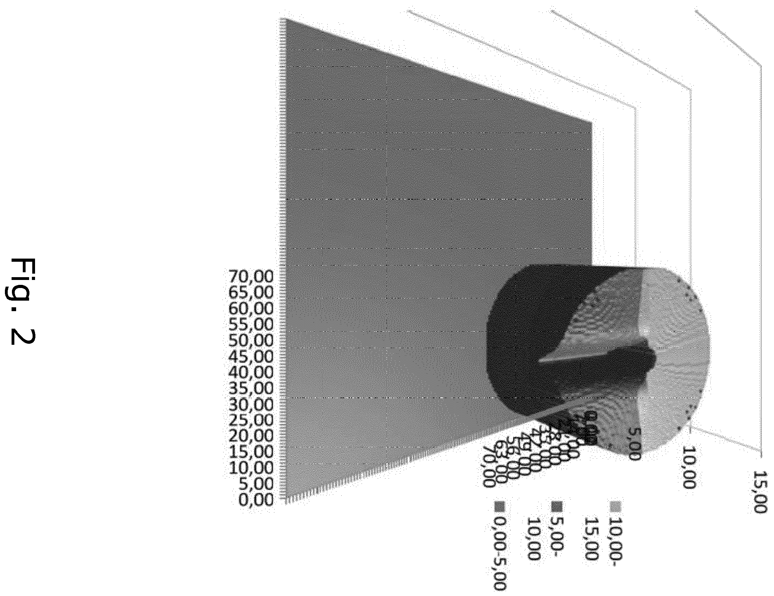

Fig. 2 illustrates the variation of wind speed at different locations in relation to the wind turbine tower. Fig. 2 shows a "cut" cylinder "coloured" with different shades. In fig. 2 one should imagine the location of rotor axis to be in the axial center of the cylinder with the rotor plane located at the top of the cylinder and being perpendicular to the axial axis of the cylinder.

The actual wind speed encountered at various positions in the vicinity of the tower is affected by two factors. One is the wind shear or wind gradient. The other effect affecting the actual wind speed is the shadowing effect of the wind turbine tower.

Fig. 2 shows that the actual wind speed generally increases with height (wind shear). Fig. 2 also shows that in a vertical area in front of the wind turbine tower, the actual wind speed is considerably reduced due to the shadowing effect of the wind turbine tower.

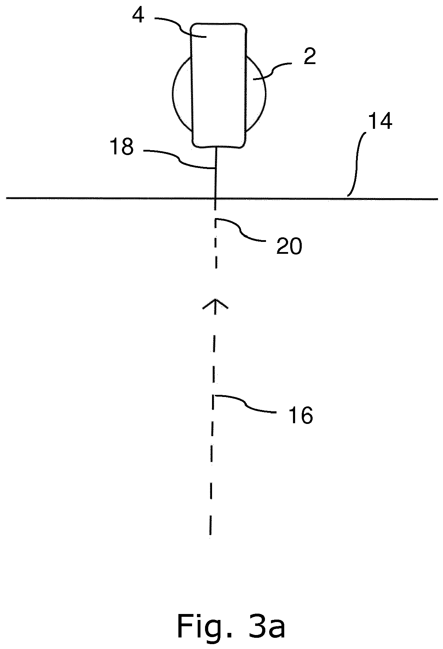

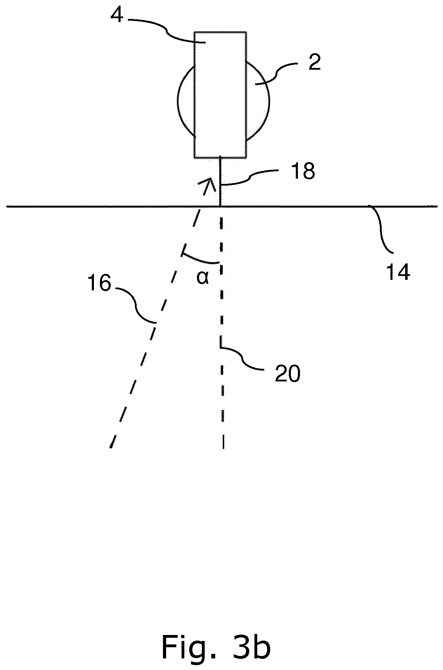

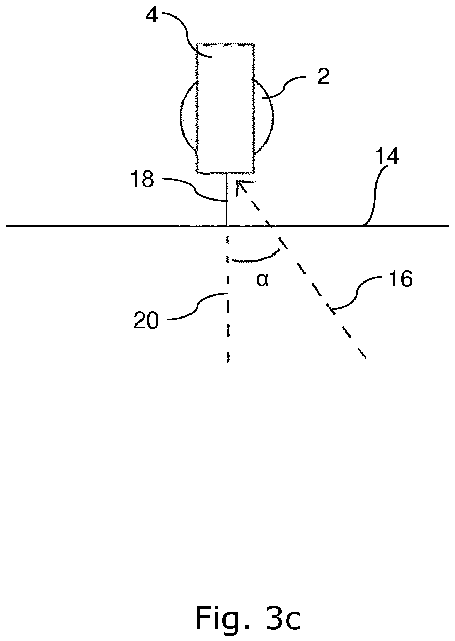

Fig. 3A, 3B and 3C each illustrates situations of operation of a wind turbine having zero yaw error (Fig. 3A) or having a yaw error different from zero (Fig. 3B and 3C), respectively.

In fig. 3A is schematically illustrated a top view of a wind turbine tower 2 carrying a nacelle 4 at its top. The nacelle comprises a rotor axle 18. Wind turbine blades, defining a rotor plane 14, are being attached to the rotor axle 18. The rotor axle 18 defines a rotor axis 20.

In fig 3A the wind is blowing in a direction 16 which is parallel to the rotor axis 20 and accordingly perpendicular to the rotor plane. Accordingly, in the situation depicted in Fig. 3A no yaw error is present.

In fig. 3B is illustrated schematically the same wind turbine as depicted in fig 3A. However, in fig. 3B, the wind is blowing in a direction 16 which is not parallel to the rotor axis 20 and therefore not perpendicular to the rotor plane 14.

Rather, in fig. 3B the wind direction 16 is offset in relation to the direction of the rotor axis 20. This offset amount to a yaw error α. In the situation depicted in fig. 3B the nacelle need to be adjusted by the angle α upwind to the right (as seen from the perspective of the nacelle) in order to achieve a maximum power uptake.

Fig. 3C illustrates a situation similar to that of fig. 3B. In fig. 3C the same wind turbine as depicted in fig 3A is schematically depicted. Again, in fig. 3C, the wind is blowing in a direction 16 which is not parallel to the rotor axis 20 and therefore not perpendicular to the rotor plane 14.

In fig. 3C the wind direction 16 is offset in relation to the direction of the rotor axis 20. This offset amount to a yaw error α. In the situation depicted in fig. 3C the nacelle need to be adjusted by the angle α upwind to the left (as seen from the perspective of the nacelle) in order to achieve a maximum power uptake.

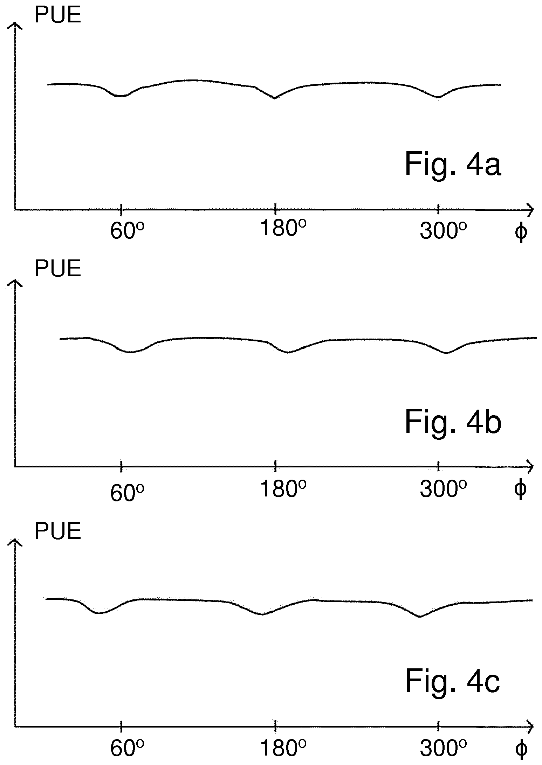

Fig. 4A, 4B and 4C each illustrates an idealized curve defining the correlation of a power uptake equivalent (PUE) of a wind turbine rotor having three blades as a function of azimuth angle of one of the blades.

The term "idealized" as used in the section above shall be interpreted to mean that the curve representing the power uptake equivalent is idealized in the sense that it does not have embedded therein any significant amount of signal noise. Rather, the curve representing the power uptake equivalent is "clean" to such an extent that the tower shadow effect is readily recognizable.

In fig. 4A, 4B and 4C the y-axis thus represents the power uptake equivalent (PUE), whereas the x-axis represents the azimuth angle Φ of one of the rotor blades of a rotor having three blades equally spaced by an angle of 120°.

Fig. 4A is a curve illustrating the correlation between a power uptake equivalent (PUE) of a wind turbine rotor as a function of time during approximately a full 360°rotation of the rotor. The power uptake equivalent curve comprises three low parts which correspond to an azimuth angle Φ of one of the rotor blades at 60°, 180° and 300°, respectively.

These azimuth angles of one of the rotor blades correspond to a situation in which one of the three rotor blades is having an azimuth angle Φ of 180°. In such a situation one of the rotor blades is encountering a shadowing effect from the tower and a minimum of power uptake by the rotor is expected, provided that no yaw error is present.

By assigning each low part of the power uptake equivalent (PUE) to the shadowing effect of the wind turbine tower it can be deduced that as these low parts of the power uptake equivalent (PUE) can be assigned to an azimuth angle Φ of one wind turbine blade of 180°. Fig. 3A represents a situation in which the rotor plane is aligned in relation to the wind direction to an extent that no yaw error is present.

Accordingly, Fig. 4A corresponds to the situation depicted in Fig. 3A.

This situation is in contrast to the situation depicted in Fig. 4B and Fig. 4C.

In Fig. 4B it can be seen that the three lower parts of the power uptake equivalent (PUE) appears at azimuth angles Φ of one of the rotor blades which are slightly delayed (Fig. 4B) and slightly in advance (Fig. 4C) in relation to a situation in which one wind turbine blade is having an azimuth angle of exactly 180° (corresponding to an azimuth angle of an arbitrary wind turbine blade of exactly 60°, 180° or 300°).

Accordingly, Fig. 4B and 4C illustrates situations in which the rotor plane is aligned in relation to the wind direction to an extent where a yaw error is present.

Fig. 4B represents the situation depicted in fig. 3B, whereas Fig. 4C represents the situation depicted in Fig. 3C.

In order to optimize the efficiency of the wind turbine, in the situation depicted in Fig. 4B and Fig. 4C, the yaw angle needs to be adjusted.

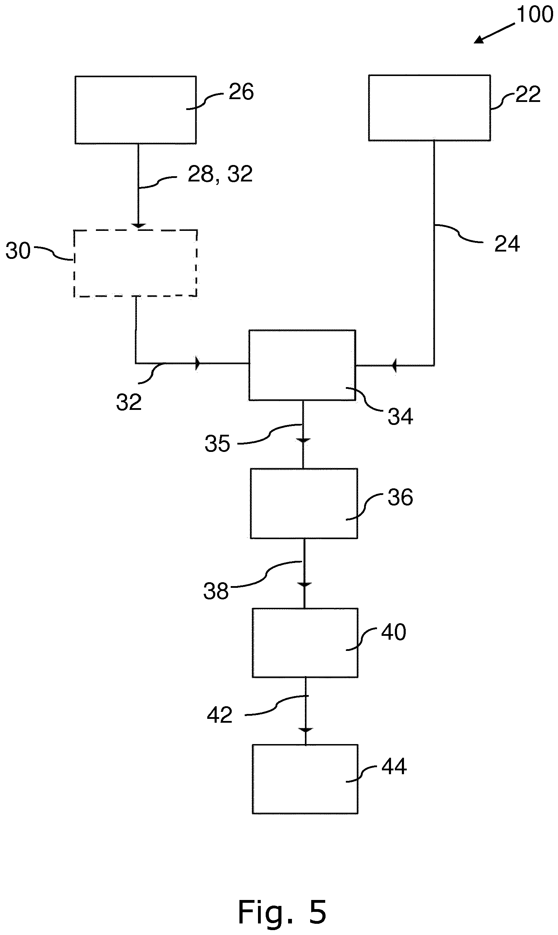

Fig. 5 illustrates a control system 100 for controlling a wind turbine yaw according to the present invention.

The measuring means 26 which is located at a suitable location in relation to the wind turbine or the generator of the wind turbine, such as at the nacelle of the wind turbine measures one or more performance yield parameters 28. The one or more performance yield parameters 28 may alone or in combination represent a power uptake equivalent.

In case the one or more performance yield parameters 28 measured do not in themselves represent a power uptake equivalent (PUE), such power uptake equivalent PUE may be calculated by the optional calculation means 30 which converts the performance yield parameters 28 to represent a power uptake equivalent 32.

At the same time of measuring performance yield parameter 28 or power uptake equivalent 30, also azimuth angle values 24 are being measured on the wind turbine by means of azimuth identification means 22.

Having measured azimuth angles 24 along with one or more performance yield parameters 28 or a power uptake equivalent 32, these various values are being processed and correlated by correlation means 34 which sends information as to this correlation to detection means 36.

Detections means 36 detects whether or not a yaw misalignment is being present.

In case a yaw misalignment is being present, as detected by detection means 36, these detection means 36 will transmit a control signal 38 to the control unit 40.

The control unit 40 sends an instruction 42 to the yaw mechanism 44 instructing the adjust the yaw in one direction or the other, depending on the actual misalignment situation, and in order to minimize or even eliminate the yaw error.

The control system 100 of the present invention preferably is operated in a mode where it constantly and repeatedly performs the measurements and operations described above in order to constantly and repeatedly adjusts the yaw so as to minimize or even eliminate yaw errors.

It should be understood that all features and achievements discussed above and in the appended claims in relation to one aspect of the present invention and embodiments thereof apply equally well to the other aspects of the present invention and embodiments thereof.

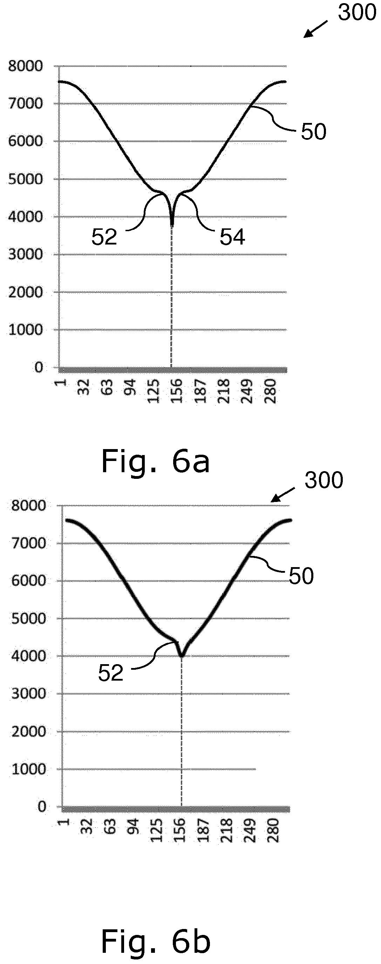

Fig. 6a is a graphical representation of a power uptake equivalent obtained from measurements as a function of measured azimuth angles at a yaw misalignment of zero (0) degree.

Fig. 6b is a graphical representation of a power uptake equivalent obtained from measurements as a function of measured azimuth angles at a yaw misalignment of 40 degrees.

In fig. 6a and 6b the x-axis does not represent real azimuth angles of a specific wind turbine blade. Rather, the x-axis represents segments of azimuth angles ranging from segment No. 1 to segment No. 300, where each segment corresponds to 1.2 degrees.

An azimuth angle of 180° is in fig. 6a and 6b represented on the x-axis by the segment having No. 150.

In fig. 6a the curve 50 is representing a power uptake equivalent as a function of azimuth angle is symmetrically arranged around the segment No. 150 (as illustrated with the dashed line), corresponding to 180° in respect of a situation in which no yaw error or yaw misalignment is present. It is seen in fig. 6a that the curve 50 comprises a first shoulder 52 and a second shoulder 54 symmetrically arranged around the segment No. 150 (= 180°).

Between the shoulders 52 and 54 a relatively steep dive in the value of power uptake equivalent is encountered. This steep dive represents the tower shadow encountered by a wind turbine blade sweeping in front of the tower because the tower in this area shadows the wind turbine blade.

In fig. 6b the curve 50 is representing a power uptake equivalent as a function of azimuth angle is asymmetrically arranged around the segment No. 158, corresponding to approximately 190° (as illustrated by the dashed line) in respect of a situation in which a yaw error or yaw misalignment of 40° is present. (Note here that in fig. 6b the lowest point of the curve is offset by 8 segments (to the right) compared to the situation in fig. 6a).

It is seen in fig. 6b that the curve 50 comprises only a first shoulder 52 left to the segment No. 150.

The reason that only one shoulder is present in the curve 50 seen in fig. 6b is that the yaw error is so great (40°) in the situation of fig. 6b that the tower shadow effect is being delocalized or "diluted" or "blurred out" due to the larger distance between the tower and the lowest wind turbine blade in such a situation representing yaw error, and compared to the situation illustrated in fig. 6a. Accordingly, only one shoulder is detectable in this situation.

It is expected that by gradually decreasing the yaw error from 40° to 0°, gradually a second shoulder will emerge and be more and more easily detectable.

Accordingly, in the system and in the use and method of the present invention and in order to precisely identify moments in time where a low power uptake is being truly encountered due to the shadowing effect by the tower (and not by other effects, such as wind shear or rapid variations in the general wind speed at the location of the wind turbine) it will be beneficial to look for and identify such one or two shoulders.

Having identified locations on such a curve 50 (representing a power uptake equivalent as a function of azimuth angle) of one or two shoulders 52,54 enables an operator to reliably identify situations in which low power uptake is truly being encountered due to the shadowing effect of the tower, as opposed to being encountered due to other effects, such as variations in wind speed.

By investigating the curve 50 in vicinity of such shoulders, (i.e. between two shoulders if two shoulders are present and/or on both sides of a shoulder, at a distance of a shoulder corresponding to an azimuth angle of up to 10°) the exact position of the lowest power uptake equivalent allows one to determine the azimuth angle at which a power uptake minimum is truly being encountered due to the tower effect. This in turn allows an operator to determine with greater precision whether or not a yaw error or yaw misalignment is present.

Hence, in monitoring the performance of a wind turbine according to the various aspects of the present invention by monitoring azimuth angles and along herewith by monitoring one or more performance yield parameters in order to determine a power uptake equivalent as a function of azimuth angles, an operator may provide means for mathematically analyzing a curve 50 representing a power uptake equivalent of the wind turbine so as to identify one or two "shoulders" of that curve 50 so as to identify areas of that curve 50 which represent low power uptake of the wind turbine, wherein this low power uptake truly is caused by the tower effect on the wind.

Preferably, such mathematical analysis is performed continuously during periods of time of operation of the wind turbine.

Preferably, such mathematical analysis is performed by computer means.

The invention in its various aspects and embodiments may be further explained with reference to the items 1 - 48 set out below:
Item 1: A control system (100) for controlling yaw of a wind turbine (200) having a vertically oriented tower (2); a nacelle (4) pivotally connected to a top end of said tower; a rotor (11) comprising two or more rotor blades (8,10,12) and being mechanically connected to an electric generator arranged in said nacelle; and a yaw mechanism (44) for altering the yaw angle of the nacelle; wherein
   said system comprises:
   azimuth identification means (22) for identification the azimuth angle (Φ) of one of said rotor blades (8,10,12) as a function of time;
   measuring means (26) for measuring one or more performance yield parameters (28) of said wind turbine as a function of time;
   calculation means (30) for assigning a power uptake equivalent (PUE) from said one or more performance yield parameters (28), in a case where said one or more performance yield parameters themselves does/do not represent a power uptake equivalent;
   correlation means (34) for correlating i) the azimuth angle (Φ) of one of the rotor blades, as identified by said azimuth identification means (22); with ii) the power uptake equivalent (PUE), as measured by said measuring means (26); or as assigned by said calculation means (30); and detection means (36) for detecting a discrepancy between a situation in which one of the rotor blades (8,10,12) is having an azimuth angle of 180° and a minimum power uptake equivalent;
   **characterized in** that said measuring means (26) is/are configured for measuring one or more performance yield parameters (28) which solely or in combination are directly correlatable with a power uptake by said rotor.
Item 2: A control system (100) according to item 1, wherein the detection means (36) are configured to detect said discrepancy based on the azimuth angle (Φ) of one of the wind turbine blades (8,10,12) in a situation at which the power uptake by said rotor is at a minimum.
Item 3: A control system (100) according to item 1, wherein the detection means (36) are configured to detect said discrepancy based on the power uptake by said rotor (11) in a situation at which one of the wind turbine blades exhibits an azimuth angle of 180°.
Item 4: A control system (100) according to item 1, wherein the detection means (36) are configured to detect said discrepancy based on a time difference between the moment in time at which one of the wind turbine blades (8,10,12) is exhibiting an azimuth angle of 180° and the moment in time at which the power uptake by said rotor (11) is at a minimum.
Item 5: A control system (100) according to any of the items 1 - 4, wherein the detection means (36) is being configured to be able to provide control signal (38) indicative of a yaw misalignment in case said detection means is detecting a discrepancy.
Item 6: A control system (100) according to any of the items 1 - 5 further comprising a control unit (40) ; said control unit being configured to be able provide an instruction (42) to said yaw mechanism (44) of said wind turbine (200) in order to adjust the yaw angle of said wind turbine so as to reduce yaw misalignment.
Item 7: A control system (100) according to any of the items 1 - 6, wherein said measuring means (26) is/are configured for measuring one or more of the following performance yield parameters (28): power provided by said generator; electric voltage and current and phase shift provided by said generator; or torque of the rotor axle of said wind turbine; axial torsion of the rotor axle, power uptake as measured on the gearbox of the wind turbine; degree of axial stretch between a particular wind turbine blade and the position of mounting thereof on the hub or rotor axle; or a combination of angular velocity of the rotor and degree of axial stretch between a particular wind turbine blade and the position of mounting thereof on the hub or rotor axle.
Item 8: A control system (100) according to any of the items 1 - 7, wherein said azimuth identification means (22) is configured for identification said azimuth angle (Φ) continuously or by sampling.
Item 9: A control system (100) according to any of the items 1 - 8, wherein said measuring means (26) is configured for measuring said one or more performance yield parameters (28) continuously or by sampling.
Item 10: A control system (100) according to item 8 or 9, wherein said azimuth identification means (22) and/or said measuring means (26) is/are configured for independently measuring said azimuth angle (Φ) or performance yield parameters (28), respectively, by sampling at a sampling rate of 10 Hz or more, such as 50 Hz or more, for example 100 Hz or more, such as 500 Hz or more, e.g. 1000 Hz or more, such as 5000 Hz or more, or 10.000 Hz or more.
Item 11: A control system (100) according to any of the items 8 - 10, wherein said control system furthermore comprises computation means for interpolation of the azimuth angle (Φ); and/or of the one or more performance yield parameters (28) or the power uptake equivalent (PUE), between samples of measurements.
Item 12: A control system (100) according to item 11, wherein said computation means is being configured to perform said interpolation by mathematical techniques, such as Lagrange techniques or Savitzky-Golay techniques.
Item 13: A control system (100) according to any of the items 8 -12, wherein said computation means is being configured to identify a minimum of power uptake from said measuring means and being configured to identify an azimuth angle (Φ) in respect of one of the turbine blades (8,10,12) corresponding to this minimum; or wherein said computation means is being configured to identify an azimuth angle (Φ) of 180° in respect of one of the turbine blades (8,10,12), and being configured to identify the power uptake equivalent (PUE) at this configuration of the rotor.
Item 14: A control system (100) according to any of the preceding items, wherein said system is being configured for use with a wind turbine (200) having an essentially horizontally oriented rotor axle (18).
Item 15: A control system (100) according to any of the preceding items, wherein said system is being configured for use with a wind turbine comprising 2, 3, 4, 5 or 6 wind turbine blades (8,10,12).
Item 16: A control system (100) according to any of the preceding items, wherein said system is being configured for use with a wind turbine (200) comprising an electric generator, generating electric AC power, preferably for being connected to the grid.
Item 17: A control system (100) according to any of the items 1 - 16, wherein said control system further comprises:
   means which are configured to, in at least in an abstract way, constructing a curve (50) representing the power uptake equivalent (PUE) as a function of azimuth angles (Φ); and
   wherein said means are configured to identify "shoulder(s)" (52,54) on said curve (50);
   wherein said system is configured to identify a minimum of power uptake equivalence (PUE) on said curve in the vicinity of one or more of such shoulders (52,54);
   wherein said system is configured to only consider those minimum of power uptake equivalences (PUE) which are present in the vicinity of a "shoulder" (52,54) as minima of power uptake equivalences (PUE) which are truly caused by the shadowing effect of the tower (2) of said wind turbine (200) in the detection of a discrepancy between a situation in which one of the rotor blades (8,10,12) is having an azimuth angle of 180° and a minimum power uptake equivalent.
Item 18: A control system (100) according to item 17, wherein said system is configured to discard those minima of power uptake equivalences (PUE), which are not present in the vicinity of a "shoulder" (52,54), as minima of power uptake equivalences (PUE) to be used in the detection of a discrepancy between a situation in which one of the rotor blades (8,10,12) is having an azimuth angle of 180° and a minimum power uptake equivalent.
Item 19: A control system (100) according to item 17 or 18, wherein said system is configured for detection of minima of a power uptake equivalence (PUE) on said curve within the vicinity of such shoulder(s) corresponding to an azimuth distance from one or more of such shoulders (52,54) of ± 20° from said shoulder(s), such as within an azimuth distance of ± 10°, for example within an azimuth distance of ± 9°, for example within an azimuth distance of ± 8°, e.g. within an azimuth distance of ± 7°, such as within an azimuth distance of ± 6°, such as within an azimuth distance of ± 5°, for example within an azimuth distance of ± 4°, e.g. within an azimuth distance of ± 3°, such as within an azimuth distance of ± 2° or within an azimuth distance of ± 1° from said shoulder on said curve.
Item 20: A control system (100) according to any of the items 17 - 20, wherein a "shoulder" shall be defined as a relatively rapid increase or decrease in inclination of the tangent of said curve (50) in the vicinity of a minimum of a power uptake equivalence (PUE) of said curve.
Item 21: A control system (100) according to item 20, wherein the term "in the vicinity of a minimum of a power uptake equivalence (PUE) of said curve" shall mean within an azimuth distance corresponding to an azimuth angle of ± 20° of said minimum of power uptake equivalence (PUE) on said curve, such as within an azimuth distance of ± 10°, for example' within an azimuth distance of ± 9°, for example within an azimuth distance of ± 8°, e.g. within an azimuth distance of ± 7°, such as within an azimuth distance of ± 6°, such as within an azimuth distance of ± 5°, for example within an azimuth distance of ± 4°, e.g. within an azimuth distance of ± 3°, such as within an azimuth distance of ± 2° or within an azimuth distance of ± 1° of said minimum of power uptake equivalence (PUE) on said curve.
Item 22: A control system (100) according to any of the items 17 - 21, wherein said means for constructing a curve (50) representing the power uptake equivalent (PUE) as a function of azimuth angles (Φ) is being computer means and/or wherein said means for identifying "shoulder(s)" (52,54) on said curve (50) is being computer means.
Item 23: A control system (100) according to any of the items 17 - 22, wherein said means for constructing a curve (50) representing the power uptake equivalent (PUE) as a function of azimuth angles (Φ) is being said correlation means (34) and/or wherein said means for identifying "shoulder(s)" (52,54) on said curve (50) is being said correlation means (34).
Item 24: Use of a control system (100) according to any of the items 1 - 23 for controlling the yaw of a wind turbine (200).
Item 25: Use of a correlation between the azimuth angle (Φ) of one or more of the rotor blades (8,10,12) of a wind turbine (200) as a function of time, on the one hand; and a power uptake equivalent (PUE) of said wind turbine as a function of time, on the other hand; for controlling the yaw of said wind turbine.
Item 26: Use according to item 24 or 25 for minimizing yaw misalignment of a rotor (11) of a wind turbine (200).
Item 27: A method for controlling a wind turbine (200), comprising the steps:
   a) monitoring the azimuth angle (Φ) of one or more of the turbine blades (8,120,12) of a rotor (11) of said wind turbine (200) as a function of time;
   b) at the same time as performing step a), measuring one or more performance yield parameters (28) of said wind turbine (200) as a function of time;
   c) assigning a power uptake equivalent (PUE) from said one or more performance yield parameters (28) as a function of time;
   d) correlating the azimuth angle (Φ) of one or more of the rotor blades (8,10,12) of the wind turbine (200), as determined in step a) with the power uptake equivalent (PUE), as determined in step c);
   e) detection of a yaw misalignment in case there exist a discrepancy between a situation in which one of the rotor blades (8,10,12) is having an azimuth angle of 180° and a minimum of power uptake equivalent (PUE);
   **characterized in** that said performance yield parameters (28) solely or in combination are directly correlatable with a power uptake by said rotor (11).
Item 28: A method according to item 27 further comprising the step of adjusting the yaw angle of the rotor on the basis of detection of a yaw misalignment as determined in step e) so as to reduce or eliminate said yaw misalignment.
Item 29: A method according to item 27 or 28, wherein said one or more performance yield parameters (28) being selected from the group comprising: power provided by a generator of said wind turbine; electric voltage and current and phase shift provided by a generator of said wind turbine; or torque of a rotor axle of said wind turbine; axial torsion of the rotor axle, power uptake as measured on the gearbox of the wind turbine; degree of axial stretch between a particular wind turbine blade and the position of mounting thereof on the hub or rotor axle; or a combination of angular velocity of the rotor and degree of axial stretch between a particular wind turbine blade and the position of mounting thereof on the hub or rotor axle.
Item 30: A method according to any of the items 27 - 29, wherein said azimuth angle (Φ) determination performed in step a) are performed continuously or by sampling.
Item 31: A method according to any of the items 27 - 30, wherein said measurements one or more performance yield parameters (28) performed in step b) are performed continuously or by sampling.
Item 32: A method according to any of the items 27 or 31, wherein said measurements performed in step a) or in step b) independently are being performed by sampling at a sampling rate of 10 Hz or more, such as 50 Hz or more, for example 100 Hz or more, such as 500 Hz or more, e.g. 1000 Hz or more, such as 5000 Hz or more, or 10.000 Hz or more.
Item 33: A method according to any of the items 27 - 32 furthermore comprising interpolation of the azimuth angle (Φ); and/or of the one or more performance yield parameters (28) or of the power uptake equivalent (PUE), between samples of measurements.
Item 34: A method according to item 33, wherein said interpolation is being performed by mathematical techniques, such as Lagrange techniques or Savitzky-Golay techniques.
Item 35: A method according to any of the items 27 - 34, wherein the detection of a yaw misalignment performed in step e) is being performed by identifying a minimum of power uptake as determined in step c) and identifying an azimuth angle (Φ) corresponding to this minimum; or wherein said detection of a yaw misalignment performed in step e) is being performed by identifying an azimuth angle of 180° in respect of one of the turbine blades and identifying the power uptake equivalent (PUE) corresponding to this configuration of the rotor (11).
Item 36: A method according to any of the items 27 - 35, wherein said wind turbine (200) is having an essentially horizontally oriented rotor axle (18).
Item 37: A method according to any of the items 27 - 36, wherein said wind turbine (200) comprises 2, 3, 4, 5 or 6 wind turbine blades (8,10,12).
Item 38: A method according to any of the items 27 - 37, wherein said wind turbine (200) comprising an electric generator, generating electric AC power, preferably for being connected to the grid.
Item 39: A method according to any of the item 27 - 38, further comprising:
   constructing a curve (50) representing the power uptake equivalent (PUE) as a function of azimuth angles (Φ); and
   identifying "shoulder(s)" (52,54) on said curve (50);
   and identify a minimum of power uptake equivalence (PUE) on said curve in the vicinity of one or more of such shoulders (52,54);
   wherein in step e) only those minima of power uptake equivalences (PUE) which are present in the vicinity of a "shoulder" (52,54), are considered as minima of power uptake equivalences (PUE) which are truly caused by the shadowing effect of the tower (2) of said wind turbine (200) in the detection of a yaw misalignment when a discrepancy exists between a situation in which one of the rotor blades (8,10,12) is having an azimuth angle of 180° and a minimum power uptake equivalent.
Item 40: A method according to any of the item 39, wherein those minima of power uptake equivalences (PUE), which are not present in the vicinity of a "shoulder" (52,54), are being discarded as minima of power uptake equivalences (PUE) to be used in the detection of a yaw misalignment when a discrepancy exists between a situation in which one of the rotor blades (8,10,12) is having an azimuth angle of 180° and a minimum power uptake equivalent.
Item 41: A method according to item 39 or 40, wherein said minima of a power uptake equivalence (PUE) on said curve within the vicinity of such shoulder(s) is corresponding to an azimuth distance from one or more of such shoulders (52,54) of ± 20° from said shoulder(s), such as within an azimuth distance of ± 10°, for example within an azimuth distance of ± 9°, for example within an azimuth distance of ± 8°, e.g. within an azimuth distance of ± 7°, such as within an azimuth distance of ± 6°, such as within an azimuth distance of ± 5°, for example within an azimuth distance of ± 4°, e.g. within an azimuth distance of ± 3°, such as within an azimuth distance of ± 2° or within an azimuth distance of ± 1° from said shoulder on said curve.
Item 42: A method according to any of the items 39 - 40, wherein a "shoulder" (40,50) shall be defined as a relatively rapid increase or decrease in inclination of the tangent of said curve (50) in the vicinity of a minimum of a power uptake equivalence (PUE) of said curve.
Item 43: A method according to item 42, wherein the term "in the vicinity of a minimum of a power uptake equivalence (PUE) of said curve" shall mean within an azimuth distance corresponding to an azimuth angle of ± 20° of said minimum of power uptake equivalence (PUE) on said curve, such as within an azimuth distance of ± 10°, for example' within an azimuth distance of ± 9°, for example within an azimuth distance of ± 8°, e.g. within an azimuth distance of ± 7°, such as within an azimuth distance of ± 6°, such as within an azimuth distance of ± 5°, for example within an azimuth distance of ± 4°, e.g. within an azimuth distance of ± 3°, such as within an azimuth distance of ± 2° or within an azimuth distance of ± 1° of said minimum of power uptake equivalence (PUE) on said curve.
Item 44: A method according to any of the items 39 - 43, wherein said means for constructing a curve (50) representing the power uptake equivalent (PUE) as a function of azimuth angles (Φ) is being computer means and/or wherein said means for identifying "shoulder(s)" (52,54) on said curve (50) is being computer means.
Item 45: A method according to any of the items 27 - 44 wherein the method is being performed using a control system (100) according to any of the items 1 - 23.
Item 46: A wind turbine (200) comprising a control system (100) according to any of the items 1 -23.
Item 47: A computer program product, when running on a computing device, being adapted to perform the method of any of the items 27 - 45.
Item 48: A data storage comprising a computer program product according to item 47.

### List of reference numerals

- 2: Wind turbine tower
- 4: Wind turbine nacelle
- 6: Wind turbine hub
- 8,10,12: Wind turbine blade
- 11: Wind turbine rotor
- 14: Rotor plane of wind turbine rotor
- 16: Wind direction
- 18: Rotor axle of wind turbine rotor
- 20: Rotor axis
- 22: Azimuth identification means
- 24: Azimuth angle value
- 26: Measuring means
- 28: Performance yield parameter
- 30: Optional calculation means
- 32: Power uptake equivalent, PUE
- 34: Correlation means
- 35: Information
- 36: Detection means
- 38: Control signal
- 40: Control unit
- 42: Instruction
- 44: Yaw mechanism
- 50: Curve
- 52: First shoulder of curve corresponding to a low power uptake
- 54: Second shoulder of curve corresponding to a low power uptake
- 100: Control system
- 200: Wind turbine
- 300: Graphical representation of power uptake equivalent as function of azimuth angle
- α: Yaw error
- Φ: Azimuth angle of wind turbine blade
- PUE: Power uptake equivalent

## Claims

1. A control system (100) for controlling yaw of a wind turbine (200) having a vertically oriented tower (2); a nacelle (4) pivotally connected to a top end of said tower; a rotor (11) comprising two or more rotor blades (8,10,12) and being mechanically connected to an electric generator arranged in said nacelle; and a yaw mechanism (44) for altering the yaw angle of the nacelle;
wherein
said system comprises:
azimuth identification means (22) for identification the azimuth angle (Φ) of one of said rotor blades (8,10,12) as a function of time;
measuring means (26) for measuring one or more performance yield parameters (28) of said wind turbine as a function of time;
**characterized in that** said control system comprises calculation means (30) for assigning a power uptake equivalent (PUE) from said one or more performance yield parameters (28), in a case where said one or more performance yield parameters themselves does/do not represent a power uptake equivalent; and
correlation means (34) for correlating i) the azimuth angle (Φ) of one of the rotor blades, as identified by said azimuth identification means (22); with ii) the power uptake equivalent (PUE), as measured by said measuring means (26); or as assigned by said calculation means (30); and
detection means (36) for detecting a discrepancy between a situation in which one of the rotor blades (8,10,12) is having an azimuth angle of 180° and a minimum power uptake equivalent;
wherein that said measuring means (26) is/are configured for measuring one or more performance yield parameters (28) which solely or in combination are directly correlatable with a power uptake by said rotor.

2. A control system (100) according to claim 1, wherein the detection means (36) are configured to detect said discrepancy based on the azimuth angle (Φ) of one of the wind turbine blades (8,10,12) in a situation at which the power uptake by said rotor is at a minimum; or
wherein the detection means (36) are configured to detect said discrepancy based on the power uptake by said rotor (11) in a situation at which one of the wind turbine blades exhibits an azimuth angle of 180°; or
wherein the detection means (36) are configured to detect said discrepancy based on a time difference between the moment in time at which one of the wind turbine blades (8,10,12) is exhibiting an azimuth angle of 180° and the moment in time at which the power uptake by said rotor (11) is at a minimum.

3. A control system (100) according to any of the claims 1 or 2, wherein the detection means (36) is being configured to be able to provide control signal (38) indicative of a yaw misalignment in case said detection means is detecting a discrepancy;
and/or wherein said control system further comprising a control unit (40); said control unit being configured to be able provide an instruction (42) to said yaw mechanism (44) of said wind turbine (200) in order to adjust the yaw angle of said wind turbine so as to reduce yaw misalignment.

4. A control system (100) according to any of the claims 1 - 3, wherein said measuring means (26) is/are configured for measuring one or more of the following performance yield parameters (28): power provided by said generator; electric voltage and current and phase shift provided by said generator; or torque of the rotor axle of said wind turbine; axial torsion of the rotor axle, power uptake as measured on the gearbox of the wind turbine; degree of axial stretch between a particular wind turbine blade and the position of mounting thereof on the hub or rotor axle; or a combination of angular velocity of the rotor and degree of axial stretch between a particular wind turbine blade and the position of mounting thereof on the hub or rotor axle.

5. A control system (100) according to any of the claims 1 - 4, wherein said control system further comprises:
means which are configured to, in at least in an abstract way, constructing a curve (50) representing the power uptake equivalent (PUE) as a function of azimuth angles (Φ); and
wherein said means are configured to identify "shoulder(s)" (52,54) on said curve (50);
wherein said system is configured to identify a minimum of power uptake equivalence (PUE) on said curve in the vicinity of one or more of such shoulders (52,54);
wherein said system is configured to only consider those minimum of power uptake equivalences (PUE) which are present in the vicinity of a "shoulder" (52,54) as minima of power uptake equivalences (PUE) which are truly caused by the shadowing effect of the tower (2) of said wind turbine (200) in the detection of a discrepancy between a situation in which one of the rotor blades (8,10,12) is having an azimuth angle of 180° and a minimum power uptake equivalent.

6. Use of a control system (100) according to any of the claims 1 - 5 for controlling the yaw of a wind turbine (200).

7. Use of a correlation between the azimuth angle (Φ) of one or more of the rotor blades (8,10,12) of a wind turbine (200) as a function of time, on the one hand; and a power uptake equivalent (PUE) of said wind turbine as a function of time, on the other hand; for controlling the yaw of said wind turbine.

8. A method for controlling a wind turbine (200), comprising the steps:
a) monitoring the azimuth angle (Φ) of one or more of the turbine blades (8,120,12) of a rotor (11) of said wind turbine (200) as a function of time;
b) at the same time as performing step a), measuring one or more performance yield parameters (28) of said wind turbine (200) as a function of time;
**characterized in that** said method involves:
c) assigning a power uptake equivalent (PUE) from said one or more performance yield parameters (28) as a function of time; and
d) correlating the azimuth angle (Φ) of one or more of the rotor blades (8,10,12) of the wind turbine (200), as determined in step a) with the power uptake equivalent (PUE), as determined in step c); and
e) detection of a yaw misalignment in case there exist a discrepancy between a situation in which one of the rotor blades (8,10,12) is having an azimuth angle of 180° and a minimum of power uptake equivalent (PUE);
wherein said performance yield parameters (28) solely or in combination are directly correlatable with a power uptake by said rotor (11).

9. A method according to claim 8 further comprising the step of adjusting the yaw angle of the rotor on the basis of detection of a yaw misalignment as determined in step e) so as to reduce or eliminate said yaw misalignment.

10. A method according to claim 8 or 9, wherein said one or more performance yield parameters (28) being selected from the group comprising: power provided by a generator of said wind turbine; electric voltage and current and phase shift provided by a generator of said wind turbine; or torque of a rotor axle of said wind turbine; axial torsion of the rotor axle, power uptake as measured on the gearbox of the wind turbine; degree of axial stretch between a particular wind turbine blade and the position of mounting thereof on the hub or rotor axle; or a combination of angular velocity of the rotor and degree of axial stretch between a particular wind turbine blade and the position of mounting thereof on the hub or rotor axle.

11. A method according to any of the claim 8 - 10, further comprising:
constructing a curve (50) representing the power uptake equivalent (PUE) as a function of azimuth angles (Φ); and
identifying "shoulder(s)" (52,54) on said curve (50);
and identify a minimum of power uptake equivalence (PUE) on said curve in the vicinity of one or more of such shoulders (52,54);
wherein in step e) only those minima of power uptake equivalences (PUE) which are present in the vicinity of a "shoulder" (52,54), are considered as minima of power uptake equivalences (PUE) which are truly caused by the shadowing effect of the tower (2) of said wind turbine (200) in the detection of a yaw misalignment when a discrepancy exists between a situation in which one of the rotor blades (8,10,12) is having an azimuth angle of 180° and a minimum power uptake equivalent.

12. A method according to any of the claims 8 - 11 wherein the method is being performed using a control system (100) according to any of the claims 1 -5.

13. A wind turbine (200) comprising a control system (100) according to any of the claims 1 - 5.

14. A computer program product, when running on a computing device, being adapted to perform the method of any of the claims 8 - 12.

15. A data storage comprising a computer program product according to claim 14.
